# EUROPEAN PATENT APPLICATION

(11) **EP 1 249 807 A2**
(43) Date of publication of application: **16.10.2002**
(21) Application number: 02006945.6
(22) Date of filing: 26.03.2002
(51) Int. Cl.: G08B 13/24, G07C 9/00

(54) **ID-tag-based explanation system**

(30) Priority: 28.03.2001 JP 2001093057
(71) Applicant: NEC CORPORATION, Tokyo (JP)
(72) Inventor: Yamaguchi, Hiroshi, Minato-ku, Tokyo (JP); Kawai, Ryuichi, Minato-ku, Tokyo (JP); Iwai, Masayo, Minato-ku, Tokyo (JP)
(74) Representative: Betten & Resch

(57) **Abstract**

An ID-tag-based explanation system in which different kind of explanations are executed according to the combination of a plurality of ID tags is provided.

The ID-tag-based explanation system comprises ID tags attached to a plurality of explanation objects and indicating the explanation objects; a reader that reads types of the ID tags; and a control unit that changes explanation contents according to a combination of the explanation objects indicated by the ID tags read by the reader.

## Description

### FIELD OF THE INVENTION

The present invention relates to an ID-tag-based explanation system that comprises an ID tag indicating an object to be explained, a reader that reads the contents of an ID tag, and a control unit that performs different control based on the contents.

### BACKGROUND OF THE INVENTION

Conventional techniques using an ID tag, such as a bar code indicating the contents of a product on which the ID tag is attached, is used in a variety of fields as described below.

Japanese Patent Kokai Publication JP-A-04-145593 discloses an automatic, labor-saving distribution management system that reads data recorded on a product in non-contact mode, sorts products, and checks the number of the products.

Japanese Patent Kokai Publication JP-A-2000-011123 discloses an entrance/exit management system for personal identification and location registration. The system uses the same technique as mentioned above.

Japanese Patent Kokai Publication JP-A-11-153435 discloses a method and an apparatus for allowing a mobile object, which moves around on the ground in which ID tags are buried, to detect the position of the mobile object through an antenna installed thereon.

Japanese Patent Kokai Publication JP-A-10-222763 discloses an automatic calculation system installed in a restaurant, in which one or a plurality of tableware units, each provided with an ID tag having a unique number and an user ID card are put on a tray, and based on an ID number read by a reader, a reference is made to menus and the unit price corresponding to the ID number of the ID tag which are registered in a server, so that the user is identified based on data of the user ID card and the account of charge for the user is conducted.

Japanese Patent Kokai Publication JP-A-10-307871 discloses a lending and return control system installed in a library, in which a book ID tag, attached to a book and a member ID are used. In this system, member and book information files are separately retrieved based on the types of a member and a book ID, and if the feasibility of lending the book is verified with a reference to a lending condition table, a lending of the book is conducted.

Japanese Patent Kokai Publication JP-A-06-327369 discloses a method, in which two ID tags are used as means for ascertaining whether the individual information which a domestic animal carries is reliable or not and, if the result of the comparison of a pair of the types of ID tags of respective ones with a pair of types of the ID tag stored in a memory indicates a match, the individual information stored in the tag is determined to be reliable.

In addition, a data carrier system using an ID tag is adopted in a merchandizing system for the lending, return or burglarproof installed in a video or CD rental shop and the like, and in an automatic payment system installed in a restaurant and the like.

In a conventional explanation system installed in such a place as a museum, ID tags are attached to exhibits to be explained so that the system, by reading data from one of exhibits to be explained via a reading antenna, and referencing a database, executes explanation of the contents of the exhibit through an audio or video unit.

### SUMMARY OF THE DISCLOSURE

In the conventional application system and the conventional explanation system adopting the ID tag techniques, disclosed in the above mentioned Japanese Patent Kokai Publications JP-A-04-145593, JP-A-2000-011123, JP-A-11-153435, JP-A-10-222763, and JP-A-10-307871, the system merely processes data based on a predetermined procedure. In a method, disclosed in the above mentioned Japanese Patent Kokai Publication JP-A-06-327369, the types of two ID tags are treated as one pair and compared with the table in a memory. However, in this method, the comparison result is used only for checking to see if the information stored in the ID tag has been falsified.

In the ID tag techniques described above, the contents of an ID tag are used in a database system, which updates stock information or calculates merchandize price accumulations and the like as property data that identifies merchandize or as merchandize status data. The database system is adapted so as to record obtained property data as it is and process the data.

In the conventional explanation system, the contents of the explanation via speech or video signal, corresponding to an exhibit to be explained are the same and are not changed.

Accordingly, it is an object of the present invention to provide an ID-tag-based explanation system that gives different types of explanations according to a combination of a plurality of ID tags.

An ID-tag-based explanation system according to the present invention comprises:
a plurality of ID tags (1a1-1nn) attached to a plurality of explanation objects and indicating the explanation objects;
a reader (2) that reads a type of the ID tags; and
a control unit (13) that changes explanation contents according to a combination of the explanation objects indicated by the ID tags read by the reader.

In the present invention, the control unit (13) preferably comprises:
communication control means (4) for instructing an operation of the reader;
storage means (4) for storing the types of the ID tags read by the reader;
a plurality of ID tables (7a-7n), each storing therein codes indicating the type of the ID tag; and
program change means for grasping based on the types of the ID tags stored in said storage means and contents stored in said ID table the explanation objects presently collected and for changing the explanation contents according to the explanation objects presently collected.

In the present invention, the program change means preferably comprises:
comparison means (8) for checking the types of the ID tags stored in the storage means (4) and the contents stored in the ID table to find the currently-collected explanation objects; and
a program group (9) that includes a plurality of programs corresponding to the plurality of explanation objects and that selects from the stored programs a program to be executed according to the currently-collected explanation objects informed by the comparison means (8).

In the present invention, the program group (9) has a deeper layer program for the same explanation object and selects from the stored programs a program to be executed according to a number of the currently-collected explanation objects informed by the comparison means (8).

The system according to the present invention associates a combination of ID tags with processing to be executed for the combination of ID tags and switches over the operation to be executed according to the explanation objects read from a plurality of ID tags.
Still other objects and advantages of the present invention will become readily apparent to those skilled in this art from the following detailed description in conjunction with the accompanying drawings wherein only the preferred embodiments of the invention are shown and described, simply by way of illustration of the best mode contemplated of carrying out this invention. As will be realized, the invention is capable of other and different embodiments, and its several details are capable of modifications in various obvious respects, all without departing from the invention. Accordingly, the drawing and description are to be regarded as illustrative in nature, and not as restrictive.

### BRIEF DESCRIPTION OF THE DRAWINGS

FIG. 1 is a block diagram showing the configuration of one embodiment of the present invention; and
FIG. 2 is a flowchart showing the operation of the embodiment shown in FIG. 1.

### PREFERRED EMBODIMENTS OF THE INVENTION

Preferred embodiments of the present invention will now be described with reference to the drawings.

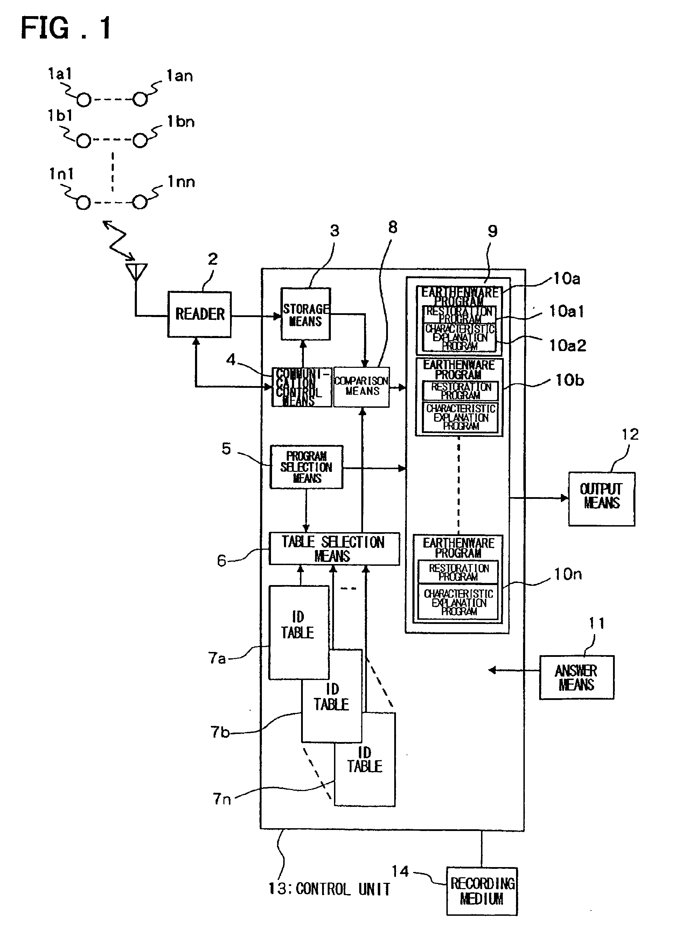

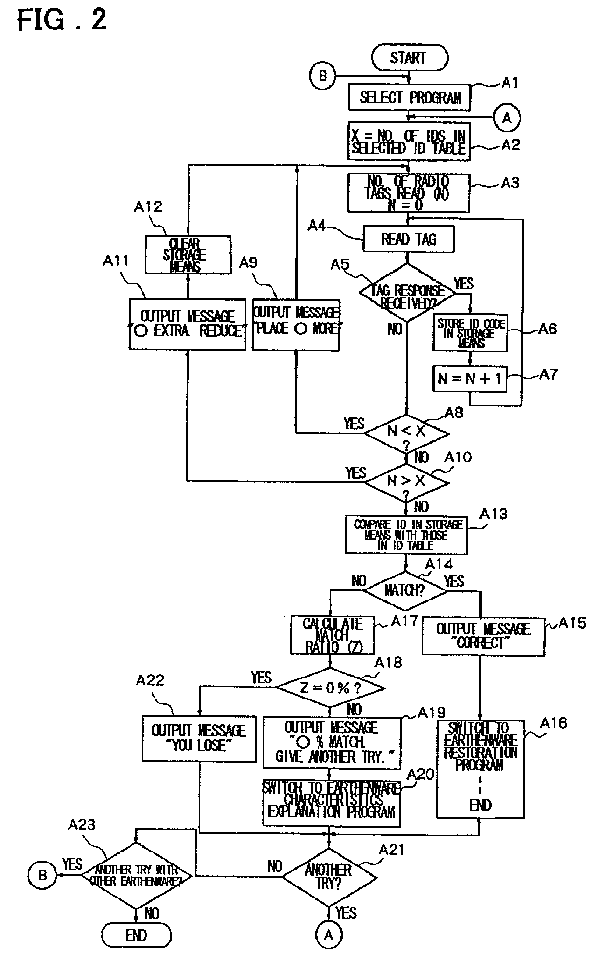

FIG. 1 is a block diagram showing the configuration of a system in accordance with an embodiment of the present invention, and FIG. 2 is a flowchart showing the operation.

In this embodiment, an explanation combined with a game is conducted with regard to one unit of earthenware which a user has selected from a plurality of earthenware units. Each of the plurality of earthenware units is composed of shards that are fragments of the earthenware and has a wireless tag attached thereto. The user searches for the shards based on the characteristic and the like in order to combine the shards and to restore the earthenware which the user has selected for getting explanation.

When a plurality of wireless tags come into the communication area of a reader that reads wireless tag information, the system in this embodiment switches the program to be executed according to the combination of wireless tags without requesting the user to use operation means such as switches and the like.

The system according to this embodiment comprises wireless tags 1a1-1nn, a reader 2, answer means 11, output means 12 such as a liquid crystal display device and a CRT, a control unit 13, and a recording medium 14. The control unit 13 comprises storage means 3, communication control means 4, program selection means 5, table selection means 6, a plurality of ID tables 7a-7n, comparison means 8, and program group 9. The program group 9 comprises earthenware program 10a - earthenware program 10n, which are respectively provided for earthenware a - earthenware n. Each of the earthenware program 10a - earthenware program 10n comprises a restoration program and a characteristic explanation program arranged on a deep layer. For example, the earthenware program 10a comprises a restoration program 10a1 and a characteristic explanation program 10a2.

The wireless tags 1a1-1nn and the earthenware program 10a - earthenware program 10n in this embodiment are each provided for earthenware a - n (not shown). Plural number of wireless tags which output in the same signal format are used as wireless tags 1a1-1nn.

The ID tables 7a -7n, which are associated with the earthenware program 10a - earthenware program 10n, are provided also for the earthenware a - n. The tables contain information on the wireless tags 1a1-1nn of the shards of earthenware a - n.

The reader 2 reads, under control of the communication control means 4, the contents of the wireless tags 1a1-1nn that are brought into the readable area. After reading the contents, the reader 2 informs the communication control means 4 that the contents have been read and sends the contents of the wireless tags 1a1-1nn that have been read to the storage means 3. The comparison means 8 receives the contents of the wireless tags 1a1-1nn from the storage means 3 and the contents of one of the ID tables 7a-7n from the table selection means 6, and sends the comparison result to the program group 9. The program group 9, which is combined with the comparison means 8 to compose program change means, receives the information indicating the comparison result sent from the comparison means 8, and the information indicating the program selected by the program selection means 5 and, according to those contents, switches over the program to be executed.

The control unit 13 is a standard computer system. The control unit (not shown) of the control unit, which controls the overall operation, reads a program from the recording medium 14 and controls the operation of the program and the program switched by the program group 9.

The program selection means 5 and the answer means 11 receive a user input. For example, in response to a request indicating that the user selects earthenware a as the earthenware to be restored, the program selection means 5 selects the earthenware program 10a, which corresponds to the earthenware a to be restored, from the program group 9 and, at the same time, outputs to the table selection means 6 the signal indicating that the ID table 7a, which corresponds to the earthenware program 10a, is to be selected.

The table selection means 6, which receives information on the wireless tags 1a1-1nn sent from the ID tables 7a-7n, sends information on wireless tags 1a1-1an corresponding to the earthenware a to be restored.

The information stored in the ID table 7a, which is sent to the comparison means 8, is an ID code group composed of wireless tags 1a1-1an attached to the plurality of shards of the earthenware a. The comparison means 8 compares this information with the wireless tags read by the reader 2 (including a combination wireless tags) and sends the comparison result to the program group 9.

When the comparison result of the comparison means 8 indicates a perfect match, that is, when only and all shards of the earthenware a are found, the program group 9 switches the program to the restoration program 10a1 on the deep layer. When the result is an imperfect match, that is, when several shards of the earthenware a are missing or when other shards are mixed, the program group 9 switches the program to the characteristic explanation program 10a2. In this way, a check is made for identifying the combination of wireless tags found in the readable area of the reader 2, and the program to be executed is switched automatically according to the combination of the wireless tags.

Next, the operation of this embodiment will be described with reference to the flowchart in FIG. 2.

First, a user enters an answer into the answer means 11 indicating with which earthenware a - n, the user will play the game. The program selection means 5 selects one of earthenware program 10a - earthenware program 10n from the program group 9 according to the user's answer (step A1). For convenience of description, it is assumed that the user has selected the earthenware a and that the earthenware program 10a has been selected.

The contents of the game by the earthenware program 10a are as follows. The shards of the earthenware a which are mixed with shards of other earthenware b - n, are searched for based on the characteristics and the like of the earthenware a. If all shards are successfully found by the user, the game is switched over to the restoration game of the earthenware a. If only a part of the shards are found, the match ratio is displayed and the game is switched over to the characteristics explanation of the earthenware a. If no shard is found, the user is asked whether he or she wants to play the game of the same earthenware a or play the game of other earthenware b - n. If the user does not want to play any game, the game of the earthenware program is finished.

When the earthenware program 10a is selected, the table selection means 6 selects the ID table 7a associated with the earthenware program 10a in advance by the program selection means 5, and the ID code number stored in the ID table 7a is assigned to the variable (X) (step A2). The variable (X), which indicates the number of shards (ID code number) of the earthenware a, is supplied to the control unit 13 in advance.

In step A3 that follows, the number (N) of wireless tags 1a1-1nn to be read by the reader 2 is initialized to "0" before the game starts.

In response to a read instruction issued by the communication control means 4, the reader 2 sends a question signal to a communication area in which the reader 2 can conducts a wireless communication with the wireless tags 1a1-1nn (hereinafter, simply termed wireless tag 1) attached to the shards (step A4) and checks whether a response sent from a wireless tag 1 in the area is received(step A5).

The reader 2 accepts the wireless tag 1 that has first responded to the question signal, detects its ID code, and informs the ID code to the storage means 3. The ID code is written in the storage means 3 (step A6). The number (N) of tags that is read is incremented by 1 (step A7) and control is passed back to step A4 to allow the reader 2 to accept the response from other wireless tags.

When plural wireless tags 1 are placed in the communication area, the question and response are repeated in steps A4-A7 and the ID codes of all wireless tags 1 in the communication area are written in the storage means 3.

When the communication with all the wireless tags 1 is finished and no wireless tag 1 is found in the area that responds to the question signal from the reader 2, the number of shards (X) of the earthenware a is compared with the number of wireless tags 1 (N) that were read (steps A8 and A10). If the number of wireless tags 1 (N) that were read is smaller than the number of shards (X) of the earthenware a, the message is displayed on the output means 12 indicating that the shortage of wireless tags 1 shall be supplemented (step A9).

When the message is output in step A9, one or more wireless tags 1 remain in the communication area. In order to compare the number of shards (X) with the accumulation number of wireless tags 1 (N) that have been added (steps A8 and A10), control is passed back to step A3 and the number of tags (N) is initialized to "0". After that, steps A3-A9 are repeated. When the number of shards (X) becomes equal to the number of wireless tags 1 (N), the ID codes in the storage means 3 are compared with those in the ID table 7a (step A13).

When the wireless tags 1 are placed in the communication area, one at a time or a few with some time interval, steps A3 - A9 are repeated and hence, the result is obtained in the same manner as when wireless tags 1 are placed at a time as in the above case.

If the number of wireless tags 1 (N) that were read is larger than the number of shards (X) of the earthenware a, they are compared in step A10 and the message is displayed on the output means 12 indicating that surplus wireless tags shall be reduced (step A11). After that, the contents of the storage means 3 are cleared (step A12) and the number of wireless tags (N) that were read is initialized to 0 (step A3).

By repeating the loop of steps A3, A4, A5, A6, A8, and A9 in which the shortage are supplemented and the loop of steps A3, A4, A5, A6, A8, A10, A11, and A12 in which the surplus are reduced, the number of wireless tags 1 (N) eventually becomes equal to the number of ID codes (X) in the ID table 7a.

The comparison means 8 compares the ID codes stored in the ID table 7a with the ID codes of the wireless tags 1 stored in the storage means 3 (steps A13 and A14). If they perfectly match, the message "Correct" is output to the output means 12 (step A15) and, after that, the earthenware program 10a in execution is switched over to the restoration program 10a1 (step A16).

If the comparison in step A14 indicates an imperfect match, the match ratio (Z) is calculated (step A17). A check is made if the match ratio (Z) is "0" (step A18). If the match ratio (Z) is "0", that is, if the ID codes do not match the corresponding ID codes at all, a perfect mismatch message is output to the output means 12 (step A22). On the other hand, if the match ratio (Z) is not "0", that is, if the ID codes match the corresponding ID codes partially, the match ratio (Z) and the message are output to the output means 12 (step A19) and then the earthenware program 10a currently in execution is switched over to the characteristic explanation program 10a2 (step A20).

After executing steps A16, A20, or A22, the user is asked if the earthenware program 10a in execution should be executed again (step A21). If the user responds with "Yes" through the answer means 11, control is passed to the step (step A2) in which the number of ID codes in the ID table 7a is assigned to the variable (X) and the earthenware program 10a is executed again.

If the user who receives a confirmation message in step A21 responds with "No" through the answer means 11, the user is asked if he or she is going to play a game with earthenware other than the earthenware a (step A23). If the user responds with "Yes" through the answer means 11, control is passed back to step A1 and the user is asked to select earthenware to be used in the game.

If the user responds with "No" through the answer means 11, the earthenware program 10a in execution ends and control is passed to the program selection means 5 to reset the state to the initial state.

Although, in this embodiment, there is a one-to-one correspondence between the earthenware programs, each prepared for one piece of earthenware, and ID tables, it is possible to prepare a plurality of ID tables that establish a one-to-n correspondence to make one earthenware program correspond to n kinds of wireless tags. In addition, although only ID codes are recorded in an ID table in the computer in this embodiment, other information associated with ID codes may be added to the table for outputting more detailed messages. For example, not only a message indicating how many shards are missing but also a message indicating what shard is missing may be output.

Furthermore, although an ID code recorded in a wireless tag is used for identification and comparison in this embodiment, a unique code rather than an ID code may be recorded both in the user memory area of the wireless tag and in the table in the computer. This gives the same effect just as the ID code described above is used. In addition, the tag is not limited to a wireless tag but an ID tag such as a bar code indicating the contents of an object may be used.

Although the system in this embodiment is a game-like explanation system that is used to combine the shards, the present invention may be applied also to the embodiments described below.

In one embodiment, the present invention is applied to a cooking guide system that stores various foodstuffs with wireless tags in separate containers and explains the recipes according to the foodstuffs read by the reader.

In another embodiment, the present invention is applied to a system that attaches wireless tags to merchandize or products, identifies a predetermined combination, for example, a combination of the same material, the same producer, the same production date, and so on, and explains what they have in common, how they are related, and what each product is.

The meritorious effects of the present invention are summarized as follows.
The system according to the present invention, which has the configuration described above, has the effects described below.

The system provides the table in which the ID codes of objects to be explained are stored, causes the reader to read a combination of ID codes of ID tags, compares them for identification, and selectively switches the program to be executed according to the objects currently collected, thus making it possible to give users a realistic, satisfactory explanation.

The system eliminates the need for user's input operation, such as an operation through switches, and the explanation are made to proceed only by collecting explanation objects while the user is manipulating the explanation objects. This enables the user to take an interest in the objects to be explained and to have a better understanding in the objects.
It should be noted that other objects, features and aspects of the present invention will become apparent in the entire disclosure and that modifications may be done without departing the gist and scope of the present invention as disclosed herein and claimed as appended herewith.
Also it should be noted that any combination of the disclosed and/or claimed elements, matters and/or items may fall under the modifications aforementioned.

## Claims

1. An ID-tag-based explanation system **characterized in that**
the system comprises:
a plurality of ID tags (1a1-1nn) attached to a plurality of explanation objects for indicating the explanation objects;
a reader (2) that reads a type of the ID tag; and
a control unit (13) that changes explanation contents based on a combination of the explanation objects indicated by the ID tags read by said reader.

2. The ID-tag-based explanation system as defined in claim 1, **characterized in that**
said control unit comprises:
communication control means (4) for instructing an operation of said reader;
storage means (3) for storing the type of the ID tag read by said reader;
a plurality of ID tables (7a-7n), each storing therein a code indicating the type of the ID tag; and
program change means for grasping based on the types of the ID tags stored in said storage means and contents stored in said ID table the explanation objects presently collected and for changing the explanation contents according to the explanation objects presently collected.

3. The ID-tag-based explanation system as defined in claim 2, **characterized in that**
said program change means comprises:
comparison means (8) for comparing the types of the ID tags stored in said storage means and the contents stored in said ID table to grasp the explanation objects presently collected; and
a program group (9) storing a plurality of programs corresponding to a plurality of said explanation objects and selecting from said stored programs a program to be executed according to the explanation objects presently collected, informed by said comparison means.

4. The ID-tag-based explanation system as defined in 3, **characterized in that**
the program group (9) has a deeper layer program for the same explanation object and selects from the stored programs a program to be executed according to a number of the currently-collected explanation objects informed by said comparison means.

5. The ID-tag-based explanation system as defined in claim 1, **characterized in that**
said control unit (13) comprises:
communication control means (4) for instructing an operation of said reader;
storage means (3) for storing the type of the ID tag read by said reader;
a plurality of ID tables (7a-7n), associated with said plurality of programs, each of said ID tables storing therein an ID code indicating the type of associated ID tag;
a program group (9) stored in a memory, said program group including a plurality of programs (10a-10n) associated with a plurality of said explanation objects;
program selection means (5) for selecting a program to be executed from said program group (9);
table selection means (6) for selecting the ID table corresponding to a program selected; and
comparison means (8) for comparing the types of the ID tags stored in said storage means and an ID code stored in said ID table to find explanation objects present collected and for changing the explanation contents according to the combination of the ID tags presently collected;
said program group (9) receiving the information of the comparison result by the comparison means (8) and the program selected by the program selection means (5) to change a program to be executed based on the received information.

6. The ID-tag-based explanation system as defined in claim 5, **characterized in that**
the reader (2), adapted to read contents of an ID tag in a communication area of said reader, reads under control of the communication control means (4), the contents of the ID tags being collected and brought in said area and sends the contents of the ID tags that have been read to the storage means (3).
